# EUROPEAN PATENT SPECIFICATION

(11) **EP 4 290 890 B1**
(45) Date of publication and mention of the grant of the patent: **05.08.2026**
(21) Application number: 22178422.6
(22) Date of filing: 10.06.2022
(51) Int. Cl.: H04L 45/28, H04W 4/02, G01S 5/02, H04L 27/26, H04W 64/00, H04W 84/12, H04W 40/20

(54) **CONFIGURATION OF A POSITIONING SESSION**
KONFIGURATION EINER POSITIONIERUNGSSITZUNG
CONFIGURATION D'UNE SESSION DE POSITIONNEMENT

(43) Date of publication of application: 13.12.2023
(73) Proprietor: Nokia Technologies Oy, 02610 Espoo (FI)
(72) Inventor: BARBU, Oana-Elena, 9000 Aalborg (DK); KIILERICH PRATAS, Nuno Manuel, 9260 Gistrup (DK); VEJLGAARD, Benny, 9260 Gistrup (DK)
(74) Representative: Richardt Patentanwälte PartG mbB

(56) References cited:
- KR-B1- 100 947 726
- US-A1- 2022 007 150

## Description

### TECHNICAL FIELD

Various example embodiments generally relate to the field of wireless communications. Some example embodiments relate to configuration of a positioning session in a data communication network.

### BACKGROUND

Various wireless communication systems, such as for example wireless local area networks (WLAN), may support positioning. Positioning may be based on timing measurements, which may be performed according to a positioning protocol. For example, IEEE 802.11 standards enable a range measurement from an initiating station (ISTA) to a responding station (RSTA) by measuring a time of flight (TOF). An ISTA may determine its position based on positioning measurements of multiple RSTAs. US 2022/007150 A1 discloses systems and methods for 5g location support using service based interfaces. KR 100 947 726 B1 discloses an event triggered positioning method in mobile communication system.

### SUMMARY

Technical features of the invention are described in the appended claims. This summary is provided to introduce a selection of concepts in a simplified form that are further described below in the detailed description. Example embodiments enable to reduce power consumption and use of transmission resources for positioning. These benefits may be achieved by the features of the independent claims. Further implementation forms are provided in the dependent claims, the description, and the drawings.

According to a first example, an apparatus is disclosed. The apparatus may comprise: means for determining at least one routing parameter of a protocol layer of a data communication network, wherein the protocol layer is above a physical layer in a protocol stack of the data communication network; and means for configuring a physical layer positioning session based on stability or change of the at least one routing parameter.

According to an example embodiment of the first example, the protocol layer comprises an internet protocol layer.

According to an example embodiment of the first example, the at least one routing parameter comprises at least one of: a destination address, a remaining number of hops, a next hop identifier, a routing protocol type, or a link failure flag.

According to an example embodiment of the first example, the apparatus comprises: means for triggering the physical layer positioning session, in response to detecting a change in the remaining number of hops and/or the next hop identifier for the destination address and detecting no change in the routing protocol type of and the link failure flag associated with the destination address.

According to an example embodiment of the first example, the apparatus comprises: means for triggering the physical layer positioning session with a reduced set of positioning measurements, in response to detecting a subset of routing parameters to fulfil a condition for triggering the physical layer positioning session.

According to an example embodiment of the first example, the apparatus comprises: means for transmitting a request to reduce a number of positioning reference signals of the physical layer positioning session, in response to detecting a subset of routing parameters to fulfil a condition for triggering the physical layer positioning session.

According to an example embodiment of the first example, the apparatus comprises: means for deactivating or determining not to trigger the physical layer protocol session, in response to detecting no change in the remaining number of hops and/or the next hop identifier for the destination address.

According to an example embodiment of the first example, the apparatus comprises: means for monitoring the at least one routing parameter periodically.

According to an example embodiment of the first example, a period of monitoring the at least one routing parameter is shorter than a period of positioning reference signal transmission or a measurement period of positioning reference signals of the physical layer positioning session.

According to an example embodiment of the first example, the at least one routing parameter is associated with a communication session, wherein a carrier frequency of the communication session is different from a carrier frequency of the physical layer positioning session.

According to an example embodiment of the first example, the apparatus comprises: means for determining a plurality of routing parameters associated with a plurality of communication sessions on different carrier frequencies; means for determining a combined metric for the plurality of routing parameters for determining whether to trigger or deactivate the physical layer positioning session, wherein weights assigned for the plurality of routing parameters decrease when carrier frequency increases.

According to an example embodiment of the first example, the apparatus comprises: means for evaluating the stability or change of the at least one routing parameter, in response to detecting no communication exchanges within a period.

According to a second example, a method is disclosed. The method may comprise: determining at least one routing parameter of a protocol layer of a data communication network, wherein the protocol layer is above a physical layer in a protocol stack of the data communication network; and configuring a physical layer positioning session based on stability or change of the at least one routing parameter.

According to an example embodiment of the second example, the protocol layer comprises an internet protocol layer.

According to an example embodiment of the second example, the at least one routing parameter comprises at least one of: a destination address, a remaining number of hops, a next hop identifier, a routing protocol type, or a link failure flag.

According to an example embodiment of the second example, the method comprises: triggering the physical layer positioning session, in response to detecting a change in the remaining number of hops and/or the next hop identifier for the destination address and detecting no change in the routing protocol type of and the link failure flag associated with the destination address.

According to an example embodiment of the second example, the method comprises: triggering the physical layer positioning session with a reduced set of positioning measurements, in response to detecting a subset of routing parameters to fulfil a condition for triggering the physical layer positioning session.

According to an example embodiment of the second example, the method comprises: transmitting a request to reduce a number of positioning reference signals of the physical layer positioning session, in response to detecting a subset of routing parameters to fulfil a condition for triggering the physical layer positioning session.

According to an example embodiment of the second example, the method comprises: deactivating or determining not to trigger the physical layer protocol session, in response to detecting no change in the remaining number of hops and/or the next hop identifier for the destination address.

According to an example embodiment of the second example, the method comprises: monitoring the at least one routing parameter periodically.

According to an example embodiment of the second example, a period of monitoring the at least one routing parameter is shorter than a period of positioning reference signal transmission or a measurement period of positioning reference signals of the physical layer positioning session.

According to an example embodiment of the second example, the at least one routing parameter is associated with a communication session, wherein a carrier frequency of the communication session is different from a carrier frequency of the physical layer positioning session.

According to an example embodiment of the second example, the method comprises: determining a plurality of routing parameters associated with a plurality of communication sessions on different carrier frequencies; determining a combined metric for the plurality of routing parameters for determining whether to trigger or deactivate the physical layer positioning session, wherein weights assigned for the plurality of routing parameters decrease when carrier frequency increases.

According to an example embodiment of the second example, the method comprises: evaluating the stability or change of the at least one routing parameter, in response to detecting no communication exchanges within a period-

According to a third example, a computer program or a computer program product may comprise instructions for causing an apparatus to perform at least the following: determining at least one routing parameter of a protocol layer of a data communication network, wherein the protocol layer is above a physical layer in a protocol stack of the data communication network; and configuring a physical layer positioning session based on stability or change of the at least one routing parameter. The computer program or the computer program product may comprise instructions for causing an apparatus to perform any example embodiment of the method of the second example.

According to a fourth example, an apparatus may comprise at least one processor; and at least one memory storing instructions that, when executed by the at least one processor, cause the apparatus at least to: determine at least one routing parameter of a protocol layer of a data communication network, wherein the protocol layer is above a physical layer in a protocol stack of the data communication network; and configure a physical layer positioning session based on stability or change of the at least one routing parameter. The at least one memory may store instructions that, when executed by the at least one processor, cause the apparatus to perform any example embodiment of the method of the second example.

Any example embodiment may be combined with one or more other example embodiments. Many of the attendant features will be more readily appreciated as they become better understood by reference to the following detailed description considered in connection with the accompanying drawings.

### DESCRIPTION OF THE DRAWINGS

The accompanying drawings, which are included to provide a further understanding of the example embodiments and constitute a part of this specification, illustrate example embodiments and together with the description help to understand the example embodiments. In the drawings:
FIG. 1 illustrates an example of a communication network;
FIG. 2 illustrates an example of a protocol stack;
FIG. 3 illustrates examples of IP protocol headers;
FIG. 4 illustrates an example of an apparatus configured to practice one or more example embodiments;
FIG. 5 illustrates an example of a flow chart for configuring a positioning session;
FIG. 6 illustrates an example of a flow chart for configuring a positioning session with cross-stack evaluation; and
FIG. 7 illustrates an example of a method for configuring a positioning session.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example.

Positioning may be performed by various means. As one example, positioning in IEEE 802.11 standards (e.g. 802.11az) may be based on fine timing measurement, which may comprise the range measurement from an initiating station (ISTA) to a responding station (RSTA) by measuring the time of flight (TOF) between the ISTA and RSTA. The fine timing measurement protocol may be predominantly used by an access point (AP), or a device (e.g. a mobile station (STA)) for indoor navigation. The fine timing measurement protocol may be for example based on MUSIC (MUltiple SIgnal Classification) processing of channel estimates to achieve accuracy of a few nanoseconds.

Following use cases may be considered:
AP to STA location:
   - finding a product on the shelf in a store, for which high accuracy (e.g. < 1 m) indoor navigation may be desired;
   - enhanced always located experience via improved power consumption, medium efficiency and adaptation to dense environments;
   - authenticated location, for example to prevent spoofing and sniffing via protection of the procedure;
   - enabling analytics and contextual language processing by infrastructure; or
   - passive location, which may provide fixed accuracy independent of number of locating STAs.
Point-to-point (P2P) range measurement and proximity:
   - opening a laptop when seating next to it or opening car door when standing next to it, for which high-accuracy (e.g. < 1 m) proximity positioning may be desired;
   - power efficient range measurement scheme for P2P neighbour awareness networking (NAN) environments (e.g. x10 or more).
   - Physical layer (PHY) secured proximity, for example to prevent false sense of distance: open car door/open laptop.

A series of enhancements may be introduced for positioning on top of existing positioning protocols, for example to enable an STA to be localized via relative and/or absolute positioning. For example, it may be required that accurate localization is mandatory for an ISTA, which may request assistance from an RSTA and/or an AP. Such enhancements may be for example implemented based on the high efficiency null data packet (NDP) and multi-user (MU) physical layer protocol data unit (PPDU) frames. These frames may use the same PPDU headers, modulation, symbol length, and/or subcarrier spacing as previous systems to enable easy adaptation. These frames may be used in PHY processing to collect time and/or angle measurements, such as for example time of arrival (TOA), angle of arrival (AOA), and/or angle of departure (AOD). Their respective target accuracies may be location service-dependent. Reporting may be performed via well-defined higher layer messages, for example according to LPP (LTE positioning protocol) or NRPP (NR positioning protocol).

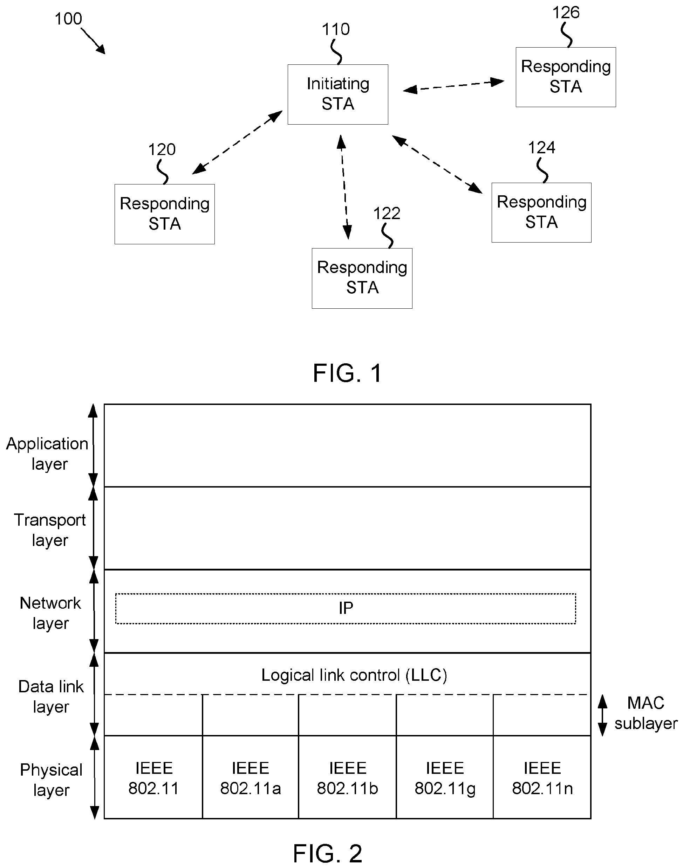

FIG. 1 illustrates an example of a communication network. Communication network 100 may comprise a data communication network, for example a wireless communication network, such as for example a radio network. Communication network 100 may be for example configured in accordance with, or based on, IEEE 802.11 standards. It is however noted that the example embodiments may be applied in any suitable wireless communication network that enables positioning, for example any current of future cellular communication system defined by the 3^{rd} Generation Partnership Project (3GPP), such as for example 4G LTE (Long-Term Evolution) or 5G NR (New Radio).

Communication network 100 may comprise one or more devices, represented in this example by STAs. Communication network 100 may for example comprise an ISTA 110 and one or more RSTAs 120, 122, 124, 126. One or more of the STAs may be however replaced with access points (AP). The positioning methods described herein may be therefore implemented by any suitable device, for example any type of STA or and access point. Alternatively, when applying the disclosed methods in cellular networks, corresponding operations may be performed by user equipment (UE) or a radio access network node.

To localize a device, positioning reference signals (PRS) may be sent over the wireless radio channel, for example with certain time-frequency pattern, code, and/or periodicity. Positioning reference signals may be measured by a positioning receiver (e.g. ISTA 110) upon detection. Metrics, such as for example time or angle of arrival may be collected from multiple transmitters (e.g. RSTAs 120, 122, 124, 126) to triangulate the position of a target device, in this example ISTA 110. Such a procedure may represent a single PHY positioning session (PPS). A single PPS may comprise signalling of measurement configuration, measurement collection, and/or location estimation.

In 802.11, the procedure for determining the round-trip time (RTT) between ISTA 110 and a responding STA (e.g. RSTA 120) may cause a significant overhead. For example, an initial RTT request may be sent and the initial RTT request may be acknowledged. This may be followed by RTT exchanges (a two-way reference signal transmission), transmission of transmission-reception (TX-RX) time difference report from RSTA 120 to ISTA 110, and its acknowledgement by ISTA 110. However, to determine its position, ISTA 110 may perform the procedure with at least three other RSTAs (122, 124, 126). The amount of needed bidirectional signalling scales with the number of RSTAs.

Depending on the application type, a PPS may be periodically triggered for example at a period of tens of milliseconds to ensure accurate user tracking. However, many devices (e.g. human-operated device or sensors) may be stationary even for tens of seconds and therefore a vast amount of positioning sessions may yield exactly the same result, thereby incurring vast amounts of: 1) signaling overhead, since thousands of signals may be sent over the wireless radio channel with approximately static angle and delay profile, and 2) processing power overhead, since the positioning receiver may collect thousands of signal samples which ultimately yield the same or similar time, angle, or power measurements.

Therefore, it may be desired to provide a mechanism that allows the PHY positioning session to take place when it is needed, for example when determining that it is likely that the user has moved. This enables to avoid unnecessary or redundant (power-hungry) PHY measurements and subsequent computations. Determining whether the user has moved may be advantageously performed based on analysing metadata of upper layer protocol(s), e.g. layer(s) above the physical layer. For example, metadata of the internet protocol (IP) may be used for this purpose. Hence, no additional sensors for detecting movement of the user may be needed.

According to an example embodiment, a device is configured to perform physical layer positioning session (PPS). The device monitors routing parameter(s) of at least one other protocol layer (e.g. IP), in order to determine how to configure the PPS. The device for example reduces the number of positioning signals/measurements, if the routing parameter(s) are stable, or triggers a PPS, in response to detecting change(s) in the routing parameter(s). A routing parameter comprises a parameter that affects routing (e.g. a route via multiple network nodes) of data packets of the associated protocol layer within a data communication network.

FIG. 2 illustrates an example of a protocol stack. Data communication in communication network 100 may be based on a protocol stack comprising various communication protocols and layers. Layers of the protocol stack may be configured to provide certain functionalities, for example based on the Open Systems Interconnection (OSI) model or a layer model of a particular standard, such as for example IEEE 802.11 or 3GPP 5G New Radio (NR).

The physical layer (Layer 1, L1) may provide data transmission services on the radio interface, for example by means of specified modulation and/or error coding schemes. The physical layer may also support positioning services by transmission of positioning reference signals (PRS), which may be defined on the physical layer, for example as predetermined values of transmission resources (e.g. modulation symbols). A physical layer positioning session (PPS) may comprise transmission and/or reception of positioning reference signals. The PPS session may comprise signalling and configuration of PRS transmission, measurements of the positioning reference signals, and/or reporting of the positioning measurements (e.g. time/angle of arrival).

In case of wireless local area networks, the physical layer may be configured according to various versions of IEEE 802.11 standard, for example the (legacy) 802.11 (defining for example frequency hopping and infrared communication), 802.11a (orthogonal frequency division multiplexing, OFDM), 802.11b (spread spectrum), 802.11g (another OFDM-based version), or 802.11n (multiple-input multiple output (MIMO) OFDM). IEEE 802.11 is however provided as one example of a physical (and MAC) layer protocol. Any suitable protocols may be applied on the various layers.

A medium access control, MAC, layer may be responsible of coordinating access to the physical layer radio interface, for example such that multiple devices (e.g. STAs and/or APs) may communicate on the shared radio interface. MAC layer may be considered as a sub-layer of Layer 2 (L2, data link layer), because it may receive data packets (MAC service data units) from another L2 sub-layer, namely the logical link control (LLC) sub-layer. MAC layer may add header and tail bytes to form MAC protocol data units, which may be provided to the physical layer for transmission. The MAC header may comprise various routing parameters such as for example MAC address(es) for the sender and/or the destination. The LLC layer may hide differences between the different 802.11 versions. The LLC layer may communicate with upper layers (e.g. network layer, transport layer, application layer) of the protocol stack, for example the internet protocol (IP) layer. The physical layer and the data link layer may together form or be part of a network interface.

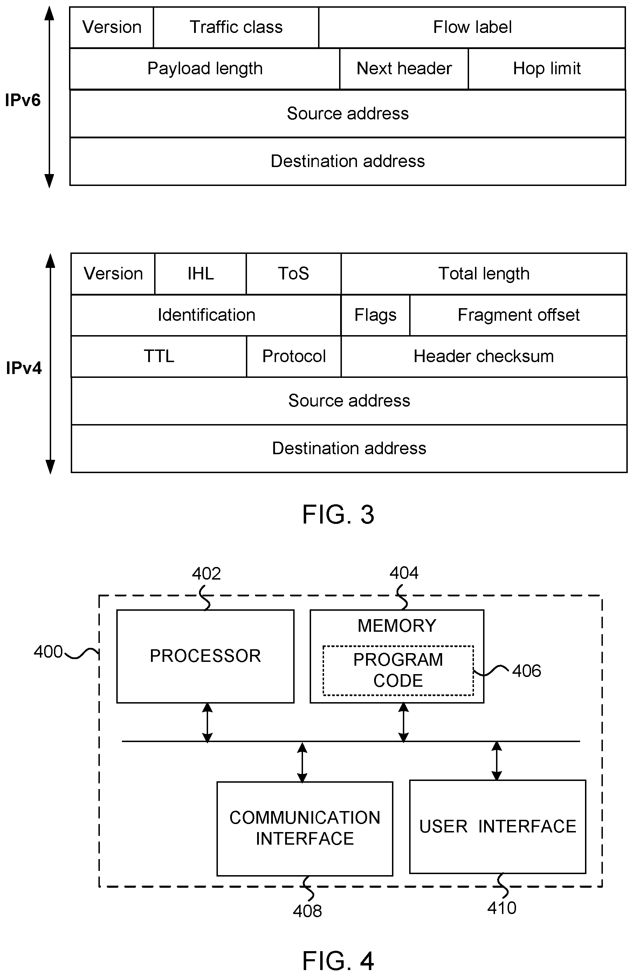

FIG. 3 illustrates examples of IP protocol headers. The IP layer may be provided on the network layer (Layer 3, L3), for example above the physical layer and the MAC layer in the protocol stack of FIG. 2. The internet protocol (IP) may apply a packet header comprising metadata of the IP layer. For example, an IPv6 header may comprise the following fields:
- Version (4 bits): bit sequence 0110 indicative of a constant value "6".
- Traffic class (6+2 bits): Bits of this field may carry two values. The six most-significant bits (MSB) may carry the differentiated services field (DS field), which may be used to classify packets. The remaining two bits may carry an explicit congestion notification (ECN), whose values may be divided into two ranges: 1) traffic where the source provides congestion control and 2) non-congestion control traffic.
- Flow label (20 bits): An identifier of a flow of packets between a source and destination. A flow may comprise a group of packets, e.g., a transmission control protocol (TCP) session or a media stream. Flow label "0" may be used to indicate that the packet does not belong to any packet flow. Alternatively, a flow may be identified by source address and port, destination address and port, and/or a protocol (e.g. value of a last next header field). The flow label may be further used to detect spoofed packets.
- Payload length (16 bits): Size of payload in octets, including any extension headers.
- Next header (8 bits): This field may specify the type of the next header. This field may indicate the transport layer protocol (a layer above the IP layer in the protocol stack) used by payload of the IP packet. When extension headers are present in the IP packet this field may include an indication of which extension header follows. The values may be shared with those used for the IPv4 protocol field, as both fields may have the same function.
- Hop limit (8 bits): Indicates a remaining number of hops, similar to the time to live (TTL) field of IPv4. Value of the hop limit field may be decremented by one at each forwarding node and the IP packet may be discarded when the value becomes zero. The destination node may however process the packet normally even if received at the destination node with a hop limit value equal to zero.
- Source address (128 bits): Address of the sending node (e.g. unicast IPv6 address).
- Destination address (128 bits): Address of the destination node(s) (e.g. IPv6 unicast or multicast address).

An IPv4 header may comprise the following fields:
- Version: The first header field in an IP packet may comprise a four-bit version field. For IPv4, this value may be set to "4".
- Internet header length (IHL): The IPv4 header may be variable in size, for example due to an optional 14^{th} field (options). The IHL field may indicate the size of the IPv4 header. It may for example have 4 bits that specify the number of 32-bit words in the header. A minimum value for this field may be 5, which indicates a length of 5 × 32 bits = 160 bits = 20 bytes. As a 4-bit field, the maximum value may be 15, corresponding to a maximum size of 15 × 32 bits = 480 bits = 60 bytes.
- Differentiated services code point (DSCP): Originally defined as the type of service (ToS), this field may specify differentiated services (DiffServ) per IETF (Internet Engineering Task Force) RFC (Request for Comments) 2474. Real-time data streaming may use the DSCP field. An example of such service is voice over IP (VoIP), which may be used for interactive voice services.
- Explicit congestion notification (ECN): this field may be according to RFC 3168 and allow end-to-end notification of network congestion without dropping packets. ECN may be an optional feature available when both endpoints support it and effective when also supported by the underlying network. ECN may be included in the IP header as another part of the ToS field.
- Total length: This 16-bit field may define the entire packet size in bytes, including header and data. The minimum size may be 20 bytes (header without data) and the maximum size may be 65,535 bytes. All hosts may be required to be able to reassemble datagrams of size up to 576 bytes, but some hosts may be able to handle also much larger packets. Links may impose further restrictions on the packet size, possibly resulting in fragmentation of IP datagrams (packets) Fragmentation in IPv4 may be performed in either the sending host or in routers. Reassembly may be performed at the receiving host.
- Identification: This field may be used for uniquely identifying the group of fragments of a single IP datagram. Optionally, this field may be used for other purposes, such as for example for adding packet-tracing information to help trace datagrams with spoofed source addresses.
- Flags: Flags may be used to control or identify fragments. The flags may for example include one or more of the following bits (from most significant to least significant): bit 0 = reserved, e.g. zero-valued (b); bit 1 = don't fragment (DF); bit 2 = more fragments (MF). If the DF flag is set, and fragmentation would be required to route the packet, the packet may be dropped. This may be used for example when sending packets to a host that does not have sufficient resources to perform reassembly of fragments. This may be also be used for path MTU (maximum transmission unit) discovery, either automatically by the host IP software, or manually using diagnostic tools such as for example ping or traceroute. For unfragmented packets, the MF flag may be cleared. For fragmented packets, all fragments except the last packet may have the MF flag set. The last fragment may have a non-zero fragment offset field, differentiating it from an unfragmented packet.
- Fragment offset: This field may indicate the offset of a particular fragment relative to the beginning of the original unfragmented IP datagram, for example in units of eight-byte blocks. The first fragment may have an offset value equal to zero. A 13-bit fragment offset field allows a maximum offset of (213 - 1) × 8 = 65,528 bytes, which, including the header length (65,528 + 20 = 65,548 bytes), supports fragmentation of packets exceeding the maximum IP packet length of 65,535 bytes.
- Time to live (TTL): This parameter may indicate a remaining number of hops, similar to the hop limit of IPv6. Time to live field (e.g. eight bits) may limit lifetime of an IP datagram, for example to prevent a network failure in the event of a routing loop. TTL may be specified in seconds, but time intervals less than 1 second may be rounded up to 1. In practice, this field may be used as a hop count. When the IP datagram arrives at a router, the router may decrements the TTL field by one. When the TTL field reaches zero, the router may discard the packet. The router may also send an internet control message protocol (ICMP) time exceeded message to the sender. The program traceroute may send messages with adjusted TTL values and use the ICMP time exceeded messages to identify the routers traversed by packets from the source to the destination.
- Protocol: This field may define the protocol used in the data portion of the IP datagram, for example according to a list of IP protocol numbers maintained by internet assigned numbers authority (IANA) as directed by RFC 790.
- Header checksum: The IPv4 header checksum field (e.g. 16 bits) may be used for error-checking of the header. When an IP packet arrives at a router, the router may calculate the checksum of the header and compare it to the checksum field. If these values do not match, the router may discard the IP packet. Errors in the data field may be handled by the encapsulated protocol. For example, both user datagram protocol (UDP) and TCP may use separate checksums that apply to their data. When an IP packet arrives at a router, the router may decrease the TTL field in the header. Consequently, the router may also calculate a new header checksum.
- Source address: This field may include the (IPv4) address of the sender of the IP packet. Note that this address may be changed in transit by a network address translation device.
- Destination address: This field may include the (IPv4) address of the receiver of the IP packet. As with the source address, this may be changed in transit by a network address translation device.

IP headers may therefore include various routing parameters, such as for example the source/destination addresses, hop limit, TTL. However, in general any parameter affected by a change of a packet route form the source to the destination may be considered as a routing parameter. Based on detecting or not detecting changes in the routing parameters, a device may determine how to configure positioning at the physical layer, as will be further described below. It is also noted that routing parameters of other layers of the protocol stack may be used instead of the IP header fields described above.

FIG. 4 illustrates an example embodiment of an apparatus 400, for example an STA such as ISTA 110 or any of RSTAs 120, 122, 124, 126, a UE, an access node, an access point, or a component or a chipset of any such device. Apparatus 400 may comprise at least one processor 402. The at least one processor 402 may comprise, for example, one or more of various processing devices or processor circuitry, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

Apparatus 400 may further comprise at least one memory 404. The at least one memory 404 may be configured to store instructions, for example as computer program code or the like, for example operating system software and/or application software. The at least one memory 404 may comprise one or more volatile memory devices, one or more non-volatile memory devices, and/or a combination thereof. For example, the at least one memory 404 may be embodied as magnetic storage devices (such as hard disk drives, floppy disks, magnetic tapes, etc.), optical magnetic storage devices, or semiconductor memories (such as mask ROM, PROM (programmable ROM), EPROM (erasable PROM), flash ROM, RAM (random access memory), etc.).

Apparatus 400 may further comprise a communication interface 408 configured to enable apparatus 400 to transmit and/or receive information to/from other devices. In one example, apparatus 400 may use communication interface 408 to transmit or receive positioning signals, for example in accordance with a wireless communication protocol. The communication interface may be configured to provide at least one wireless radio connection, such as for example a 3GPP mobile broadband connection (e.g. 3G, 4G, 5G, or future generation protocols). However, the communication interface may be configured to provide one or more other type of connections, for example a wireless local area network (WLAN) connection such as for example standardized by IEEE 802.11 series or Wi-Fi alliance; a short range wireless network connection such as for example a Bluetooth, NFC (near-field communication), or RFID connection; a wired connection such as for example a local area network (LAN) connection, a universal serial bus (USB) connection or an optical network connection, or the like; or a wired Internet connection. Communication interface 408 may comprise, or be configured to be coupled to, at least one antenna to transmit and/or receive radio frequency signals. One or more of the various types of connections may be also implemented as separate communication interfaces, which may be coupled or configured to be coupled to one or more of a plurality of antennas.

Apparatus 400 may further comprise a user interface 410 comprising an input device and/or an output device. The input device may take various forms such a keyboard, a touch screen, or one or more embedded control buttons. The output device may for example comprise a display, a speaker, a vibration motor, or the like. The output device may be for example used to output an indication of the position of apparatus 400 to a user.

When apparatus 400 is configured to implement some functionality, some component and/or components of apparatus 400, such as for example the at least one processor 402 and/or the at least one memory 404, may be configured to implement this functionality. Furthermore, when the at least one processor 402 is configured to implement some functionality, this functionality may be implemented using the program code 406 comprised, for example, in the at least one memory 404. Program code 406 is provided as an example of instructions which, when executed by the at least one processor 402, cause performance of apparatus 400.

The functionality described herein may be performed, at least in part, by one or more computer program product components such as software components. According to an embodiment, the apparatus comprises a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), application-specific Integrated Circuits (ASICs), application-specific Standard Products (ASSPs), System-on-a-chip systems (SOCs), Complex Programmable Logic Devices (CPLDs), Graphics Processing Units (GPUs).

Apparatus 400 may comprise for example a computing device such as for example a mobile station, an access node, a base station, a server, a mobile phone, a tablet computer, a laptop, an internet of things (IoT) device, or the like. Examples of IoT devices include, but are not limited to, consumer electronics, wearables, sensors, and smart home appliances. In one example, apparatus 400 may comprise a vehicle such as for example a car. Although apparatus 400 is illustrated as a single device it is appreciated that, wherever applicable, functions of apparatus 400 may be distributed to a plurality of devices, for example to implement example embodiments as a cloud computing service.

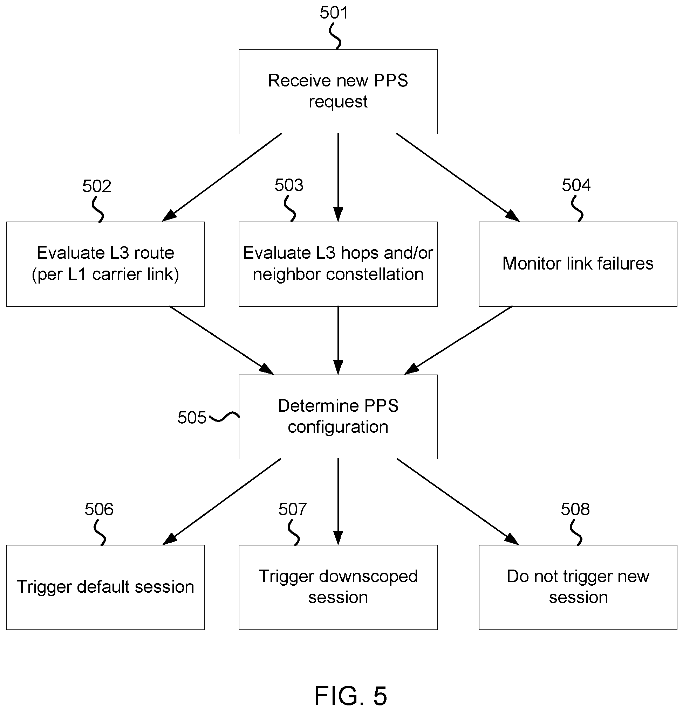

FIG. 5 illustrates an example of a flow chart for configuring a physical layer positioning session (PPS). The method may be implemented by any suitable device, such as for example ISTA 110, RSTA 120, an access point, or a user equipment (UE) of a cellular communication network. The device may coordinate PPS(s) and receive positioning measurement reports from other devices. Alternatively, or additionally, the device may perform positioning measurements and report them to another device. The device may perform positioning measurements based on a configuration (e.g. default, downscoped, or no measurements) received from another device. Alternatively, the device may configure its positioning session independently, e.g. by measuring a subset of transmitted PRSs. In case of RTT, both STAs may perform the positioning measurements.

The device may configure a PSS by requesting or not requesting other device(s) to report their measurement reports or by reducing the number of transmitted PRSs. Alternatively, the device may determine not to process at least some of received measurement reports (e.g. process a subset of received measurement results). Also, the device may configure a PPS by determining not to perform positioning measurements, for example, not to perform any positioning measurements or to perform a subset of positioning measurements. The device may also request another device to reduce the number of PRSs.

Example embodiments of the present disclosure provide a mechanism through which a PPS may be (re)configured, for example triggered, downgraded, or completely deactivated, on the fly. This enables to reduce signalling overhead and power consumption. For example, a method is provided for exploiting communication related information, such as for example routing information from the IP protocol, for (re)configuring a PPS session. This enables to reduce the localization overhead without compromising location accuracy. The (re)configuration of the PPS session may comprise one or more of the following: accepting a default configuration, reducing the PPS to a sub-session (e.g. with a reduced set of measurements and/or transmitted PRSs), or rejecting the session altogether. To determine whether and how to (re)configure the PPS session, the device may monitor how upper layer (e.g. L3) data packets have been routed throughout the network from their original source to the destination. This may be done for different active physical layer links, which may be potentially established on different carrier frequencies. Alternatively, or additionally, the device may monitor how its neighbour constellation (e.g. L3 neighbours) has changed and/or monitor link failures reported by any relays relevant to the device, in order to determine whether and how to (re)configure the PPS session. Further examples of this procedure are provided below. The device may initially configure a PPS session, for example based on a default configuration. The default configuration may comprise transmission of a default set of PRS or measurement/reporting of a default set of PRSs.

At operation 501, the device may receive a new PPS request. The PPS request may comprise a request to trigger a PPS session, for example to initiate positioning measurements and reporting of their results.

At operation 502, the device may evaluate L3 route, for example per L1 carrier link. This may include monitoring L3 routing parameter(s), such as for example the destination address, TTL, hop limit, routing protocol type, or the like, of data packets handled by the device. The data may be extracted from the IP header, stored (e.g. in a table), and compared to previous entries of the routing parameter(s). Routing protocol type may comprise the "Protocol" field of IPv4 or the "Version" field of IPv4/IPv6. If a change is detected in one or a group of parameters, the device may determine that it may have moved and (re)configure the PSS session accordingly. Evaluating the L3 route may comprise monitoring L3 routing parameter(s), or routing parameters of another layer above the physical layer in the protocol stack.

The routing information may be extracted from links (e.g. Wi-Fi links) operating at different carrier frequencies when available (e.g. 2.4 GHz, 5 GHz, 6 GHz, or 60 GHz), and then the evaluation of the routing parameters may be performed with routes associated with these links. The routing parameters may be associated with a communication session (e.g. IP session) having a carrier frequency different from the carrier frequency of the PPS.

At operation 503, the device may evaluate L3 hops and/or neighbour constellation. The device may for example evaluate the IP and/or MAC addresses of the neighbouring L3 nodes. In general, the device may determine a next hop identifier (NHI). NHI may identify the IP address of the nearest node that forwards the IP packet to its destination. Alternatively, or additionally, NHI may comprise the MAC address of the first node that receives the packet from the device. If one or a group of neighbouring nodes has changed (e.g. judging by NHI), the device may determine that it may have moved. Neighbour constellation may refer to number and/or identities (e.g. IP/MAC address) of neighbouring nodes.

At operation 504, the device may monitor link failures. Link failures may be monitored based on L3 link failure flags received from other nodes of the network. A link failure flag may indicate whether a neighbour node has received or detected a link failure, thereby causing an update of its routing table, for example during an observation window. Based on changes in the received link failure flag(s), the device may determine that it may have moved.

Monitoring and analysis of operations 502, 503, or 504 may be hence realized via a set of metrics extracted from the L1 link configuration and L3 packet headers, combining the extracted metrics, and evaluating their stability. This enables the device to assess whether a change in the routing parameters (routing pattern) is likely due to a change in the position of the device. The routing parameter(s) may be monitored periodically. The routing parameter(s) may be monitored for one or more destination addresses. A change in routing parameter(s) may be detected if at least one routing parameter changes, while being associated with the same destination address. As noted above, the routing parameters may be extracted from links operating at different carrier frequencies. The evaluation described above may be performed for routes associated with each of these links.

At operation 505, the device may determine a PPS configuration. The PPS configuration may be determined based on information obtained at one or more of operations 502, 503, and 504. For example, the device may determine to reconfigure PPS if it has determined (e.g. based on IP layer routing parameters) that the device may have moved. Note that a change of routing parameters does not necessarily indicate a change of location, but it may be used to determine that it is likely that the device has moved. This may be advantageously used for reconfiguring PPS session without any additional sensors (e.g. accelerometer). It is noted that the device may not output (even internally) an indication of whether it has moved. Instead, the device may only implicitly determine this when determining the PPS configuration based on monitoring the routing parameter(s). In general, the device may reconfigure the PPS based on stability (no change or a minor change) or change of the routing parameters.

As noted above, the device may monitor routing parameters of communication sessions occurring on different carrier frequencies. When the routing parameters are extracted from different carrier frequencies, a combined metric may be determined for deciding whether (and how) to trigger or deactivate the PPS. The metrics harvested at lower carrier frequencies may be given a higher weight in the combined metric. Weights assigned for the routing parameters may therefore decrease when the carrier frequency of the associated link increases. This may be beneficial because operation at higher carrier frequencies may be less stable (e.g. in the 60 GHz carrier) and therefore those links may be more easily disrupted, for example due to loss of line-of-sight (LOS) conditions.

At operation 506, the device may trigger a (default) PPS, in response to detecting a change in the routing parameter(s), for example the remaining number of hops (e.g. TTL/hop limit) and/or the NHI for one or more destination addresses. Triggering the PPS session may be further in response to detecting no change in the routing protocol type and/or the link failure flag of the associated destination address. The PPS may be triggered if a configured set of routing parameters (e.g. remaining number of hops, NHI, routing protocol type, and link failure flag) fulfil condition(s) for triggering the PPS.

At operation 507, the device may trigger a downscoped PPS. The downscoped PPS may comprise a reduced set of positioning measurements. Also, a reduced set of PRSs may be sent. It is however possible to measure a subset of PRSs and therefore a reduced PPS session may comprise measuring a reduced set of PRSs even of a full (e.g. default) set of PRSs were transmitted. The downscoped PPS may be triggered, in response to detecting a subset of the configured routing parameters to fulfil condition(s) for triggering the PPS. For example, a downscoped PPS may be triggered if one of the configured parameters fulfils its condition.

If the method is performed by a device that performs the positioning measurements (e.g. RSTA 120), the device may transmit a request to reduce the number of transmitted PRS associated with the PPS, in order to downscope the PPS session. This may be done in response to detecting the subset of routing parameters to fulfil the condition(s) for triggering the downscoped PPS.

At operation 508, the device may not trigger the requested PPS session. If a PPS session is ongoing, the device may deactivate the PPS session, for example terminate transmission or measurement of PRSs. This may be determined based on stability of the routing parameters, for example in response to detecting no change in the remaining number of hops and/or NHI. The device may determine that no change was detected if the routing parameters do not change compared to at least one previous time of checking the routing parameters, for example in accordance with the monitoring period.

The above procedure enables to scale down the PPS related operations when the device is (substantially) stationary, thereby reducing unnecessary use of resources, for example power or time/frequency resources. Power consumption may be reduced for example by powering off at least part of the positioning circuitry of the device. Cross-stack metrics may be advantageously used for inferring whether the device's location changed with respect to the latest PPS location.

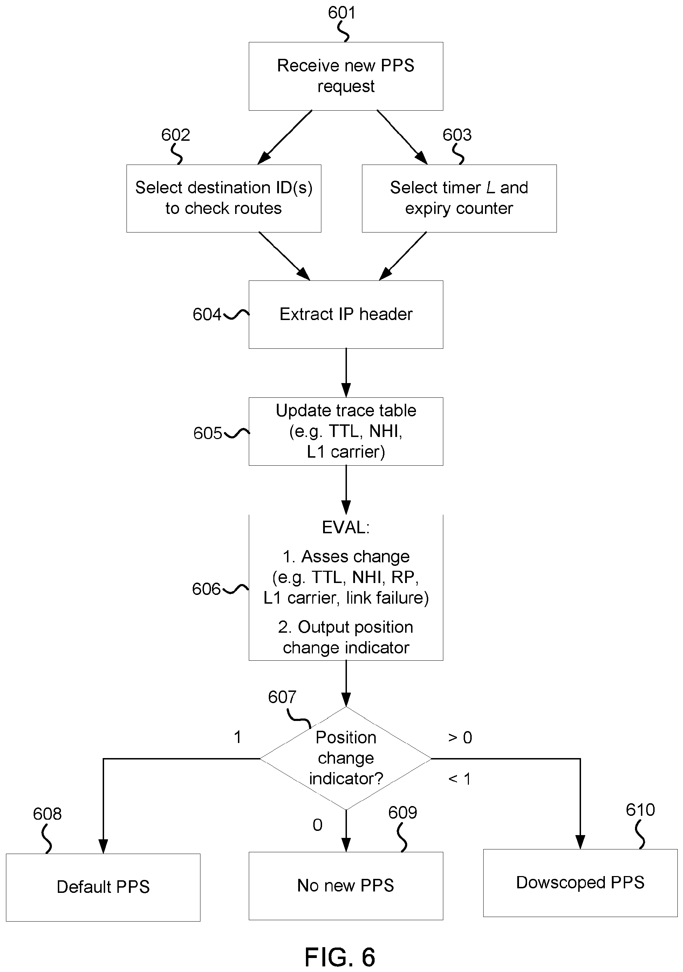

FIG. 6 illustrates an example of a flow chart for configuring a positioning session with cross-stack evaluation. Operations of this flow chart may be used as complementary for the flow chart of FIG. 5.

At operation 601, the device may receive a new PPS request, similar to operation 501.

At operation 602 , the device may select destination ID(s) (e.g. IP destination address) for checking the routes. The destination ID(s) may be selected either randomly or based on the traffic type (e.g. traffic class, type of service, or protocol field of the IP header).

At operation 603, the device may select a timer *L* and configure an associated expiry counter. The timer may be used to determine whether to trigger the requested PPS directly or whether and how to trigger the PPS subject to analysis of the routing parameters. For example, if the device determines that there have not been any communication exchanges in during a period of time (corresponding to timer *L,* e.g. the last *y* ms), the device may trigger the PPS session directly. If the device determines that there have been communication exchanges in during the period of time, the device may determine to analyse the routing parameters and configure the PPS session accordingly.

At operation 604, the device may extract an IP header. This operation may be performed for example in response to determining at operation 603 that no communication exchanges (e.g. packets received or transmitted) have occurred before expiry of the timer *L*. The device may extract routing parameters from the IP header. The device may record the extracted parameters, for example in a table at its memory. The table may be called a trace table. The extracted parameters may be associated with time stamps. For example, the device may record one or more of the following parameters:
- Monitored destination ID
- Selected L1 carrier frequency
- Most recent IPv4 TTL or IPv6 hop count (HC) to *X >* 1 destination IDs. The number of destination IDs (*X*) may be implementation specific. This metric may count the number of network nodes that a packet traverses until it its destination. The number of hops may be obtained for example using a traceroute application.
- The next hop ID (NHI ). This metric may record the IP address of the first node that forwards the packet to any destination. Note that the NHI may correspond to the MAC address of the first node that receives the transmission of the device.
- Routing protocol (RP) type
- Link failure flag

At operation 605, the trace table may be updated. For example, the device may store updated values of TTL/HC, NHI, L1 carrier, or other routing parameters. Tracking the hop count may be restricted to the first *N* hops. This may be beneficial in some use cases, for example in case of assets within containers. For example, a container may have an inbuilt access point, but when the container moves, it may move between access points (or gNBs in case of cellular connectivity). In this case, even though device's built-in serving access point has not changed, the next serving access point or gNB (i.e. serving the built-in access point )may have changed. This may be interpreted as an indication that the asset has moved, causing triggering of the new PPS.

The device may check the periodicity, e.g. *P* ms, of the PPS and set a tracking periodicity of *L* < *P* ms. The device may populate the trace table with periodicity *L*. The device may for example extract from the IP layer the above metrics every *L* ms and record them in a table associated with the latest PPS. The period of monitoring the routing parameter(s) may be therefore shorter than a PRS transmission period or a period of measuring the PRSs.

At operation 606, the device may assess whether there is a change in one or more of the routing parameters (e.g. TTL, NHI, RP, L1 carrier, link failure flag). The device may determine and output a position change indicator accordingly.

Before accepting or activating the next PPS (e.g. before *P* ms have expired), the device may analyse the routing parameter(s) to determine whether its packet route has changed with respect to a previous (e.g. latest) PPS. The device may determine a packet route change to have occurred if at least the following metrics are changing for one or more destinations:
- TTL/HL (e.g. in the total number of hops to a destination), and
- the next hop neighbour NHI,
- while the RP type and the link failure flag remain the same.

Based on the routing parameters the device may determine the position change indicator, which may for example take values between zero and one. Value "0" may indicate that position of the device has most likely not changed. Value "1" may indicate that position of the device has most likely changed. Values between "0" and "1" may indicate the probability position change for the device. This probability may be determined based on the number or proportion of routing parameters indicative of a position change.

In one example, the following code may be used to perform the method "EVAL" of operation 606 to determine and output the position change indicator: 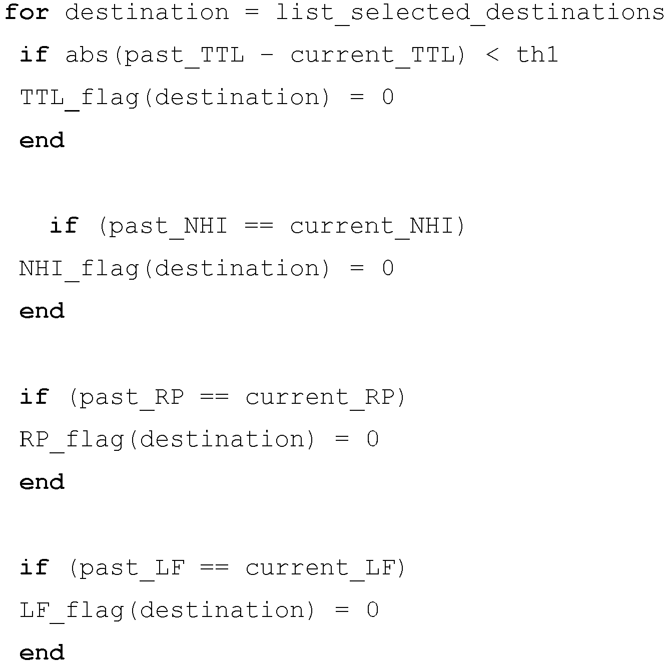 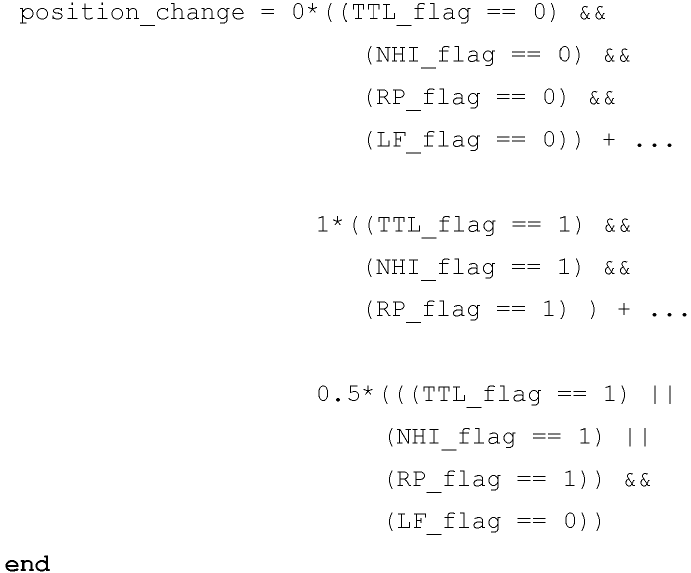 Operation "& &" may denote logical AND operation and operation "∥" may denote logical OR operation.

The device may determine whether TTL has changed based on a difference between past and current TTL values. A threshold may be set for the absolute value of the difference and a change may be determined to occur if the absolute value of the difference is above the threshold. Result of this determination may be stored as *TTL_flag* ("1" for change and "0" for no change). The code may be executed for multiple destination IDs so the *TTL_flag* may be associated with a particular destination. This applies also to other flags generated during execution of the above code.

An NHI change flag (*NHI_flag*) may be set to "0" (FALSE) if the current NHI is the same as the past NHI. Otherwise the *NH_flag* may be set to "1" (TRUE). A routing protocol change flag (*RP_flag*) may be set to "0", if the current RP is the same as the past RP. Otherwise the *RP*_*flag* may be set to "1". A link failure change flag (*LF_flag*) may be set to "0", if the current link failure flag is the same as the past link failure flag. Otherwise the *LF_flag* may be set to "1".

The position change indicator may be determined based on the above flags, for example as follows. For each of the flags, the device may evaluate whether they are equal to zero (*X_flag*==0). An AND operation may be performed based on these evaluations and multiplied by zero. Since the result of this operation is inevitably zero, this step may be omitted. For each of the flags, the device may evaluate whether they are equal to one (*X_flag*==1). An AND operation may be performed for the results of these evaluations and multiplied by one.

Furthermore, an OR operation may be performed between the *TTL_flag, NHI_flag,* and *RP_flag,* for example by *TTL_flag==*1 ∥ *NHI_flag*==1 ∥ *RP_flag==*1. An AND operation may be performed based on result of the OR operation and the *LF_flag.* The result of this evaluation may be multiplied by 0.5. Hence, the position change indicator may take a value "0.5" if a subset of the routing parameters (in this example TTL, NHI, and RP) fulfils a respective condition (e.g. *X_flag*==1)*.*

At operation 607, the device may determine to trigger the default PPS (operation 608), determine not to trigger the PPS (operation 609), or determine to trigger a downscoped PPS (operation 610), based on the value of the position change indicator. Operations 608, 609, and 610 may be similar to operations 506, 508, and 507, respectively.

The described flow chart provides an example of how the change in routing parameters (e.g. TTL, NHI and RP flag), in corroboration with the link failure and/or L1 carrier information may be used to trigger the device to conclude that its position has likely changed. This may result in outputting the position change indicator with value "1". When the device is undecided about the position change, the output may be set to 0.5.

The disclosed mechanism may be combined with other triggers, such as for example changes on received signal strength (e.g. reference signal received power, RSRP), measured for example from access point transmissions, change on observed channel congestion (e.g. a dramatic increase of channel congestion, which may indicate that the device's position has changed), lack of communications in during a time period, or the like. The device may therefore determine to (re)configure the PPS further based on stability or change of received signal strength and/or a level of channel congestion (e.g. a number of failed access attempts), or other non-IP layer parameters.

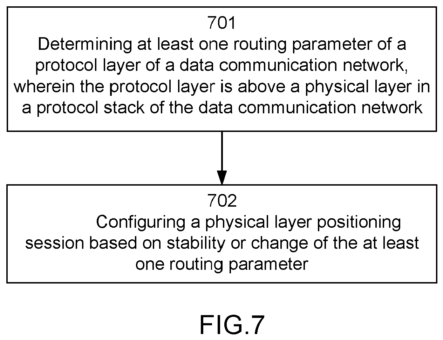

FIG. 7 illustrates an example of a method for configuring a positioning session.

At 701, the method may comprise determining at least one routing parameter of a protocol layer of a data communication network, wherein the protocol layer is above a physical layer in a protocol stack of the data communication network.

At 702, the method may comprise configuring a physical layer positioning session based on stability or change of the at least one routing parameter.

Further features of the method directly result from the functionalities and parameters of ISTA 110, any of RSTAs 120, 122, 124, or in general apparatus 400, as described in the appended claims and throughout the specification, and are therefore not repeated here. Different variations of the method may be also applied, as described in connection with the various example embodiments.

An apparatus may be configured to perform or cause performance of any aspect of the method(s) described herein. Further, a computer program or a computer program product may comprise instructions for causing, when executed, an apparatus to perform any aspect of the method(s) described herein. Further, an apparatus may comprise means for performing any aspect of the method(s) described herein. In one example, the means comprises the at least one processor 402, the at least one memory 404 storing instructions that, when executed by the at least one processor 402, cause apparatus 400 to perform the method.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

As used in this application, the term 'circuitry' may refer to one or more or all of the following: (a) hardware-only circuit implementations (such as implementations in only analog and/or digital circuitry) and (b) combinations of hardware circuits and software, such as (as applicable):(i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims.

As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of the invention, which is defined by the appended set of claims.

## Claims

1. An apparatus (400), comprising:
means for determining (701) at least one routing parameter of a protocol layer of a data communication network, wherein the protocol layer is above a physical layer in a protocol stack of the data communication network, wherein the at least one routing parameter comprises a parameter that affects routing of data packets; and
means for configuring (702) a physical layer positioning session based on stability or change of the at least one routing parameter, the configuring comprising either reducing a number of positioning measurements of the physical layer positioning session, if the at least one routing parameter is stable, or triggering the physical layer positioning session, in response to detecting a change in the at least one routing parameter.

2. The apparatus according to claim 1, wherein the protocol layer comprises an internet protocol layer.

3. The apparatus according to claim 1 or claim 2, wherein the at least one routing parameter comprises at least one of: a destination address, a remaining number of hops, a next hop identifier, a routing protocol type, or a link failure flag.

4. The apparatus according to claim 3, further comprising:
means for triggering the physical layer positioning session, in response to detecting a change in the remaining number of hops and/or the next hop identifier for the destination address and detecting no change in the routing protocol type and the link failure flag associated with the destination address.

5. The apparatus according to claim 3 or claim 4, further comprising:
means for triggering the physical layer positioning session with a reduced set of positioning measurements, in response to detecting a subset of routing parameters to fulfil a condition for triggering the physical layer positioning session.

6. The apparatus according to any of claims 3 to 5, further comprising:
means for transmitting a request to reduce a number of positioning reference signals of the physical layer positioning session, in response to detecting a subset of routing parameters to fulfil a condition for triggering the physical layer positioning session.

7. The apparatus according to any of claims 3 to 6, further comprising:
means for deactivating or determining not to trigger the physical layer positioning session, in response to detecting no change in the remaining number of hops and/or the next hop identifier for the destination address.

8. The apparatus according to any of claims 1 to 7, further comprising:
means for monitoring the at least one routing parameter periodically.

9. The apparatus according to claim 8, wherein a period of monitoring the at least one routing parameter is shorter than a period of positioning reference signal transmission or a measurement period of positioning reference signals of the physical layer positioning session.

10. The apparatus according to any of claims 1 to 9, wherein the at least one routing parameter is associated with a communication session, wherein a carrier frequency of the communication session is different from a carrier frequency of the physical layer positioning session.

11. The apparatus according to claim 10, further comprising:
means for determining a plurality of routing parameters associated with a plurality of communication sessions on different carrier frequencies;
means for determining a combined metric for the plurality of routing parameters for determining whether to trigger or deactivate the physical layer positioning session, wherein weights assigned for the plurality of routing parameters decrease when carrier frequency increases.

12. The apparatus according to any of claims 1 to 11 , further comprising:
means for evaluating the stability or change of the at least one routing parameter, in response to detecting no communication exchanges within a period.

13. A method, comprising:
determining (701) at least one routing parameter of a protocol layer of a data communication network, wherein the protocol layer is above a physical layer in a protocol stack of the data communication network, wherein the at least one routing parameter comprises a parameter that affects routing of data packets; and
configuring (702) a physical layer positioning session based on stability or change of the at least one routing parameter, the configuring comprising either reducing a number of positioning measurements of the physical layer positioning session, if the at least one routing parameter is stable, or triggering the physical layer positioning session, in response to detecting a change in the at least one routing parameter.

14. The method according to claim 13, further comprising:
triggering the physical layer positioning session with a reduced set of positioning measurements, in response to detecting a subset of routing parameters to fulfil a condition for triggering the physical layer positioning session.

15. A computer program comprising instructions for causing an apparatus to perform at least the following:
determining (701) at least one routing parameter of a protocol layer of a data communication network, wherein the protocol layer is above a physical layer in a protocol stack of the data communication network, wherein the routing parameter comprises a parameter that affects routing of data packets; and
configuring (702) a physical layer positioning session based on stability or change of the at least one routing parameter, the configuring comprising either reducing a number of positioning measurements of the physical layer positioning session, if the at least one routing parameter is stable, or triggering the physical layer positioning session, in response to detecting a change in the at least one routing parameter.

## Patentansprüche

1. Vorrichtung (400), umfassend:
Mittel zum Bestimmen (701) mindestens eines Routingparameters einer Protokollschicht eines Datenkommunikationsnetzes, wobei die Protokollschicht in einem Protokollstapel des Datenkommunikationsnetzes oberhalb einer physikalischen Schicht liegt, wobei der mindestens eine Routingparameter einen Parameter umfasst, der das Routing von Datenpaketen beeinflusst; und
Mittel zum Konfigurieren (702) einer physikalischen Schicht-Positionierungssitzung basierend auf der Stabilität oder Änderung des mindestens einen Routingparameters, wobei das Konfigurieren entweder das Reduzieren einer Anzahl von Positionierungsmessungen der physikalischen Schicht-Positionierungssitzung umfasst, wenn der mindestens eine Routingparameter stabil ist, oder das Auslösen der physikalischen Schicht- Positionierungssitzung als Reaktion auf die Erkennung einer Änderung des mindestens einen Routingparameters.

2. Vorrichtung nach Anspruch 1, wobei die Protokollschicht eine Internetprotokollschicht umfasst.

3. Vorrichtung nach Anspruch 1 oder Anspruch 2, wobei der mindestens eine Routingparameter mindestens eines der Folgenden umfasst: eine Zieladresse, eine verbleibende Anzahl von Hops, einen Nächster-Hop-Bezeichner, einen Routingprotokolltyp oder ein Verbindungsausfallkennzeichen.

4. Vorrichtung nach Anspruch 3, ferner umfassend:
Mittel zum Auslösen der physikalischen Schicht-Positionierungssitzung als Reaktion auf die Erkennung einer Änderung der verbleibenden Anzahl von Hops und/oder des Nächster-Hop- Bezeichners für die Zieladresse und die Erkennung keiner Änderung des Routingprotokolltyps und des mit der Zieladresse verbundenen Verbindungsausfallkennzeichens.

5. Vorrichtung nach Anspruch 3 oder Anspruch 4, ferner umfassend:
Mittel zum Auslösen der physikalischen Schicht-Positionierungssitzung mit einem reduzierten Satz von Positionierungsmessungen als Reaktion auf die Erkennung einer Teilmenge von Routingparametern zur Erfüllung einer Bedingung für das Auslösen der physikalischen Schicht- Positionierungssitzung.

6. Vorrichtung nach einem der Ansprüche 3 bis 5, ferner umfassend:
Mittel zum Übertragen einer Anforderung zur Reduzierung einer Anzahl von Positionierungsreferenzsignalen der physikalischen Schicht-Positionierungssitzung als Reaktion auf die Erkennung einer Teilmenge von Routingparametern zur Erfüllung einer Bedingung für das Auslösen der physikalischen Schicht-Positionierungssitzung.

7. Vorrichtung nach einem der Ansprüche 3 bis 6, ferner umfassend:
Mittel zum Deaktivieren oder zum Bestimmen, die physikalische Schicht-Positionierungssitzung nicht auszulösen, als Reaktion auf die Erkennung keiner Änderung der verbleibenden Anzahl von Hops und/oder des Nächster-Hop-Bezeichners für die Zieladresse.

8. Vorrichtung nach einem der Ansprüche 1 bis 7, ferner umfassend:
Mittel zum periodischen Überwachen des mindestens einen Routingparameters.

9. Vorrichtung nach Anspruch 8, wobei ein Überwachungszeitraum für den mindestens einen Routingparameter kürzer ist als ein Übertragungszeitraum für Positionierungsreferenzsignale oder ein Messzeitraum für Positionierungsreferenzsignale der physikalischen Schicht- Positionierungssitzung.

10. Vorrichtung nach einem der Ansprüche 1 bis 9, wobei der mindestens eine Routingparameter einer Kommunikationssitzung zugeordnet ist, wobei eine Trägerfrequenz der Kommunikationssitzung von einer Trägerfrequenz der physikalischen Schicht- Positionierungssitzung verschieden ist.

11. Vorrichtung nach Anspruch 10, ferner umfassend:
Mittel zum Bestimmen einer Vielzahl von Routingparametern, die einer Vielzahl von Kommunikationssitzungen auf verschiedenen Trägerfrequenzen zugeordnet sind;
Mittel zum Bestimmen einer kombinierten Metrik für die Vielzahl von Routingparametern zum Bestimmen, ob die physikalische Schicht-Positionierungssitzung ausgelöst oder deaktiviert werden soll, wobei die der Vielzahl von Routingparametern zugewiesenen Gewichtungen abnehmen, wenn die Trägerfrequenz steigt.

12. Vorrichtung nach einem der Ansprüche 1 bis 11, ferner umfassend:
Mittel zum Auswerten der Stabilität oder Änderung des mindestens einen Routingparameters als Reaktion auf die Erkennung keines Kommunikationsaustauschs innerhalb eines Zeitraums.

13. Verfahren, umfassend:
Bestimmen (701) mindestens eines Routingparameters einer Protokollschicht eines Datenkommunikationsnetzes, wobei die Protokollschicht in einem Protokollstapel des Datenkommunikationsnetzes oberhalb einer physikalischen Schicht liegt, wobei der mindestens eine Routingparameter einen Parameter umfasst, der das Routing von Datenpaketen beeinflusst; und
Konfigurieren (702) einer physikalischen Schicht-Positionierungssitzung basierend auf der Stabilität oder Änderung des mindestens einen Routingparameters, wobei das Konfigurieren entweder das Reduzieren einer Anzahl von Positionierungsmessungen der physikalischen Schicht-Positionierungssitzung umfasst,
wenn der mindestens eine Routingparameter stabil ist, oder das Auslösen der physikalischen Schicht-Positionierungssitzung als Reaktion auf die Erkennung einer Änderung des mindestens einen Routingparameters.

14. Verfahren nach Anspruch 13, ferner umfassend:
Auslösen der physikalischen Schicht-Positionierungssitzung mit einem reduzierten Satz von Positionierungsmessungen als Reaktion auf die Erkennung einer Teilmenge von Routingparametern zur Erfüllung einer Bedingung für das Auslösen der physikalischen Schicht- Positionierungssitzung.

15. Computerprogramm, das Anweisungen umfasst, die eine Vorrichtung dazu veranlassen,mindestens Folgendes durchzuführen:
Bestimmen (701) mindestens eines Routingparameters einer Protokollschicht eines Datenkommunikationsnetzes, wobei die Protokollschicht in einem Protokollstapel des Datenkommunikationsnetzes oberhalb einer physikalischen Schicht liegt, wobei der Routingparameter einen Parameter umfasst, der das Routing von Datenpaketen beeinflusst; und
Konfigurieren (702) einer physikalischen Schicht-Positionierungssitzung basierend auf der Stabilität oder Änderung des mindestens einen Routingparameters, wobei das Konfigurieren entweder das Reduzieren einer Anzahl von Positionierungsmessungen der physikalischen Schicht-Positionierungssitzung umfasst, wenn der mindestens eine Routingparameter stabil ist, oder das Auslösen der physikalischen Schicht-Positionierungssitzung als Reaktion auf die Erkennung einer Änderung des mindestens einen Routingparameters.

## Revendications

1. Un appareil (400), comprenant :
des moyens pour déterminer (701) au moins un paramètre de routage d'une couche de protocole d'un réseau de communication de données, dans lequel la couche de protocole est au-dessus d'une couche physique dans une pile de protocoles du réseau de communication de données, dans lequel l'au moins un paramètre de routage comprend un paramètre qui affecte le routage des paquets de données ; et
des moyens pour configurer (702) une session de positionnement de couche physique sur la base de la stabilité ou d'un changement de l'au moins un paramètre de routage, la configuration comprenant soit la réduction d'un nombre de mesures de positionnement de la session de positionnement de couche physique, si l'au moins un paramètre de routage est stable, soit le déclenchement de la session de positionnement de couche physique, en réponse à la détection d'un changement dans l'au moins un paramètre de routage.

2. L'appareil selon la revendication 1, dans lequel la couche de protocole comprend une couche de protocole Internet.

3. L'appareil selon la revendication 1 ou la revendication 2, dans lequel l'au moins un paramètre de routage comprend au moins l'un des éléments suivants : une adresse de destination, un nombre restant de sauts, un identifiant de saut suivant, un type de protocole de routage, ou un drapeau d'échec de liaison.

4. L'appareil selon la revendication 3, comprenant en outre :
des moyens pour déclencher la session de positionnement de couche physique, en réponse à la détection d'un changement dans le nombre restant de sauts et/ou l'identifiant de saut suivant pour l'adresse de destination et à la détection d'aucun changement dans le type de protocole de routage of et le drapeau d'échec de liaison associé à l'adresse de destination.

5. L'appareil selon la revendication 3 ou la revendication 4, comprenant en outre :
des moyens pour déclencher la session de positionnement de couche physique avec un ensemble réduit de mesures de positionnement, en réponse à la détection d'un sous-ensemble de paramètres de routage visant à remplir une condition pour déclencher la session de positionnement de couche physique.

6. L'appareil selon l'une quelconque des revendications 3 à 5, comprenant en outre :
des moyens pour transmettre une demande de réduction d'un nombre de signaux de référence de positionnement de la session de positionnement de couche physique, en réponse à la détection d'un sous-ensemble de paramètres de routage visant à remplir une condition pour déclencher la session de positionnement de couche physique.

7. L'appareil selon l'une quelconque des revendications 3 à 6, comprenant en outre :
des moyens pour désactiver ou déterminer de ne pas déclencher la session de positionnement de couche physique, en réponse à la détection d'aucun changement dans le nombre restant de sauts et/ou l'identifiant de saut suivant pour l'adresse de destination.

8. L'appareil selon l'une quelconque des revendications 1 à 7, comprenant en outre :
des moyens pour surveiller l'au moins un paramètre de routage de manière périodique.

9. L'appareil selon la revendication 8, dans lequel une période de surveillance de l'au moins un paramètre de routage est plus courte qu'une période de transmission de signaux de référence de positionnement ou une période de mesure des signaux de référence de positionnement de la session de positionnement de couche physique.

10. L'appareil selon l'une quelconque des revendications 1 à 9, dans lequel l'au moins un paramètre de routage est associé à une session de communication, dans lequel une fréquence porteuse de la session de communication est différente d'une fréquence porteuse de la session de positionnement de couche physique.

11. L'appareil selon la revendication 10, comprenant en outre :
des moyens pour déterminer une pluralité de paramètres de routage associés à une pluralité de sessions de communication sur différentes fréquences porteuses ;
des moyens pour déterminer une métrique combinée pour la pluralité de paramètres de routage afin de déterminer s'il convient de déclencher ou de désactiver la session de positionnement de couche physique, dans lequel les pondérations attribuées pour la pluralité de paramètres de routage diminuent lorsque la fréquence porteuse augmente.

12. L'appareil selon l'une quelconque des revendications 1 à 11, comprenant en outre :
des moyens pour évaluer la stabilité ou le changement de l'au moins un paramètre de routage, en réponse à la détection d'aucun échange de communication au cours d'une période.

13. Un procédé, comprenant :
la détermination (701) d'au moins un paramètre de routage d'une couche de protocole d'un réseau de communication de données, dans lequel la couche de protocole est au-dessus d'une couche physique dans une pile de protocoles du réseau de communication de données, dans lequel l'au moins un paramètre de routage comprend un paramètre qui affecte le routage des paquets de données ; et
la configuration (702) d'une session de positionnement de couche physique sur la base de la stabilité ou d'un changement de l'au moins un paramètre de routage, la configuration comprenant soit la réduction d'un nombre de mesures de positionnement de la session de positionnement de couche physique,
si l'au moins un paramètre de routage est stable, soit le déclenchement de la session de positionnement de couche physique, en réponse à la détection d'un changement dans l'au moins un paramètre de routage.

14. Le procédé selon la revendication 13, comprenant en outre :
le déclenchement de la session de positionnement de couche physique avec un ensemble réduit de mesures de positionnement, en réponse à la détection d'un sous-ensemble de paramètres de routage visant à remplir une condition pour déclencher la session de positionnement de couche physique.

15. Un programme informatique comprenant des instructions pour amener un appareil à effectuer au moins les opérations suivantes :
la détermination (701) d'au moins un paramètre de routage d'une couche de protocole d'un réseau de communication de données, dans lequel la couche de protocole est au-dessus d'une couche physique dans une pile de protocoles du réseau de communication de données, dans lequel le paramètre de routage comprend un paramètre qui affecte le routage des paquets de données ; et
la configuration (702) d'une session de positionnement de couche physique sur la base de la stabilité ou d'un changement de l'au moins un paramètre de routage, la configuration comprenant soit la réduction d'un nombre de mesures de positionnement de la session de positionnement de couche physique, si l'au moins un paramètre de routage est stable, soit le déclenchement de la session de positionnement de couche physique, en réponse à la détection d'un changement dans l'au moins un paramètre de routage.
